Europäisches Patentamt

European Patent Office

Office européen des brevets

(19)

(11) Publication number: **0 012 600**
**B1**

(12) **EUROPEAN PATENT SPECIFICATION**

(45) Date of publication of patent specification: **14.03.84**

(51) Int. Cl.³: **B 60 R 19/04**

(21) Application number: **79302858.0**

(22) Date of filing: **12.12.79**

(54) **Bumper assembly.**

(30) Priority: **13.12.78 US 968957**

(43) Date of publication of application:
**25.06.80 Bulletin 80/13**

(45) Publication of the grant of the patent:
**14.03.84 Bulletin 84/11**

(84) Designated Contracting States:
**DE FR GB**

(56) References cited:
**none**

(73) Proprietor: **FORD MOTOR COMPANY LIMITED**
**Eagle Way**
**Brentwood Essex CM13 3BW (GB)**
(84) **GB**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Mason, James Lewis**
**7101 Cathedral Drive**
**Birmingham Michigan 48010 (US)**
Inventor: **Varjabedian, Steve**
**18219 Greenwald Drive**
**Southfield, Michigan 48075 (US)**

(74) Representative: **Drakeford, Robert William et al,**
**Ford Motor Company Limited 15/448, Research &**
**Engineering Centre Laindon**
**Basildon Essex SS15 6EE (GB)**

Courier Press, Leamington Spa, England.

Bumper assembly

This invention pertains to a bumper assembly for automotive vehicles and more particularly, to a 'rear bumper for a light truck or van-type vehicle.

One of the ways in which automobile and truck manufacturers are attempting to improve the average fuel efficiency of the vehicles is by reducing the weight of the vehicle components. Reduction of vehicle weight permits smaller, more fuel efficient engines to be used to power the vehicle. One area under study has been the bumpers which conventionally are made of heavy gauge steel. It has been proposed that the bumpers are fabricated of aluminium or plastic material, both of which permit a weight and cost saving over the types of steel conventionally used in bumper fabrication. (See for example US—A—3,427,062; US—A—3,774,952; and US—A—3,905,527). Bumpers made of aluminium or plastic, however, present fabrication difficulties, and also have met consumer resistance as being of questionable durability and damageability.

Rear bumpers for light trucks and van-type vehicles, in particular, present even greater fabrication difficulties than the ordinary box-section bumper (as for example illustrated in U.S—A—3,790,200) since it is desirable that a step portion be incorporated in the bumper structure to facilitate ingress and egress to the cargo area of the truck or van.

The current availability of high strength, low alloy steels having the formability characteristics of mild steels now presents the opportunity to greatly reduce the gauge and thereby the weight of the metal used in a rear step bumper at only a slight cost penalty over the use of aluminium.

According to the present invention, there is provided a bumper assembly comprising an elongated lower cross-member, the length of which extends the full width of the bumper assembly, the lower cross-member having two step portions separated by a central portion, the lower cross-member having at one longitudinal edge an integral upstanding kick plate flange extending substantially the full length of the cross-member and having at its other longitudinal edge a down-turned flange, the two flanges coacting to provide longitudinal rigidity to the lower cross-member, an upper cross-member having step portions extending parallel to and overlying in spaced vertical relationship the step portions of the lower cross-member, the upper cross-member step portions having a longitudinal space therebetween overlying the central portion of the lower cross-member to provide a visibility opening for a vehicle licence plate mounted on the kick plate flange, the upper cross-member at one longitudinal edge being supported on the upper edge of the lower cross-member kick plate flange, and a plurality of vertical bulkheads between the upper and lower cross-members for maintaining the two in spaced relationship under vertical load.

This construction allows the manufacture of a bumper bar which is not only relatively light, but which also has step formations of adequate strength.

A preferred embodiment of the invention will now be described, by way of example only, with reference to the accompanying drawings, in which:

Figure 1 is a fragmentary perspective view of the rear end of a light truck having a dual-step rear bumper assembly embodying the present invention mounted thereon; and

Figure 2 is a sectional view taken on the line 2—2 of Figure 1.

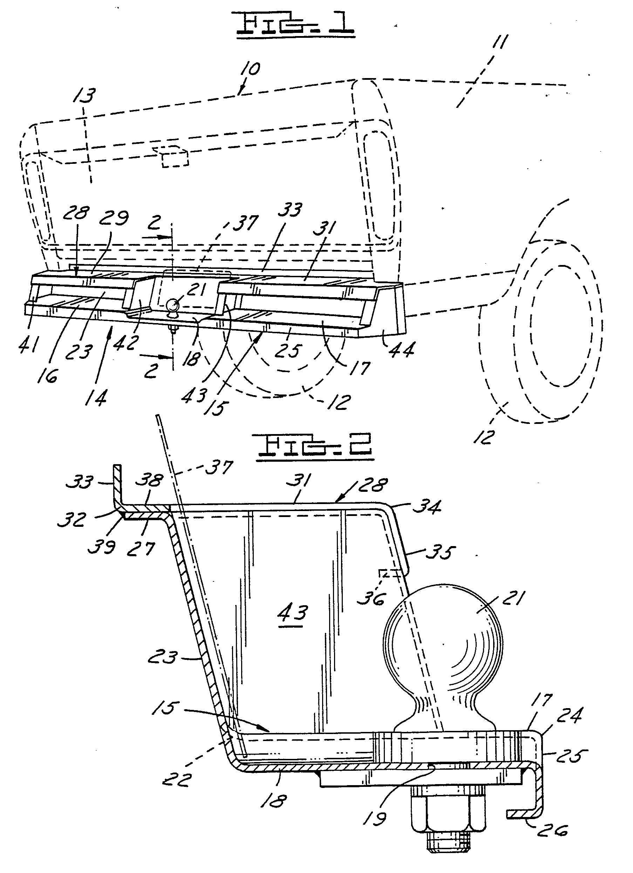

Referring to the drawings, Figure 1 shows the rear end of a pickup truck, generally designated 10, having a cargo box 11 located above the rear road wheels 12. Below and extending rearwardly of the tailgate 13 of the cargo box 11 is a dual-step bumper assembly, generally designated 14.

The dual-step rear bumper assembly 14 comprises an elongated lower cross-member 15 that, for maximum strength and minimum steel weight, preferably is formed of high strength, low alloy steel. The lower cross-member 15 has two step portions 16 and 17 separated by a depressed centre portion 18 apertured at 19 to receive a trailer hitch ball 21. The lower cross-member 15 is formed at one longitudinal edge 22, the left edge as viewed in Figure 2, with a slightly inclined kick plate flange 23. At its other edge 24, the right edge as viewed in Figure 2, the cross-member 15 is formed with a downwardly turned flange 25 having a reverse lift 26 turned underneath the cross-member. The kick plate flange 23 terminates at its upper edge in a lip flange 27 turned away from and substantially paralleling the plane of the lower cross-member 15. The edge flanges 23 and 25, being formed integrally with the cross-member 15, reinforce and coact to provide longitudinal rigidity to the cross-member 15.

The dual-step bumper assembly 14 has an upper cross-member 28 having two step portions 29 and 31 that parallel and overlie the lower cross-member step portions 16 and 17. Each step portion 29 and 31 preferably has a tread plate or non-skid surface. As viewed in Figure 2, along its left edge 32 the upper cross-member 28 has a relatively short upwardly turned flange 33, and along the right edge 34 of each step portion a downwardly turned flange 35 having an inwardly turned lip flange 36.

Step portions 29 and 31 have a longitudinal space therebetween overlying the depressed central portion 18 of the lower cross-member 15. This provides a cavity and visibility opening for a vehicle license plate 37 that may be mounted on the kick plate flange 23 of the lower cross-member 15.

The left marginal edge portion 38 of the upper cross-member 28 overlies the lip flange 27 of the kick plate flange 23 of the lower cross-member 15 and is fastened thereto, as by welding, as indicated at 39 in Figure 2. In effect, the step portions 29 and 31 of the upper cross-member 28 are cantilevered over the step portions 16 and 17, respectively, of the lower cross-member 15. A plurality of bulkheads 41, 42, 43, and 44 are interposed between the upper and lower step portions, as best seen in Figure 1. The bulkheads are channel-shaped pieces with the two end pieces 41 and 44 capping the ends of the bumper assembly 14, and the two inner pieces 42 and 43 extending between the inner edge portions of the upper and lower step portions of the cross-members. These vertical bulkheads are welded in place and act as tension members when weight is put on the lower step portion and as compression members when weight is placed on the upper step portion.

The object of the present invention was to develop a steel step bumper that would approach the weight of the same bumper fabricated out of aluminum and at a cost not to exceed that of a conventional steel step bumper of the type used on recent model light trucks. A bumper constructed in accordance with the present invention fabricated out of mild steel was calculated to have a weight of 18.1 kg (42 pounds). This would be 10.0 kg (22 pounds) lighter than a current production step bumper having the same general dimensions and only 4.5 kg (ten pounds) heavier than an equivalent aluminum bumper. The weight of the same bumper made of high strength, low alloy steel would drop to 15.9 kg (35 pounds), only 2.3 kg (five pounds) over the weight of an aluminum bumper. The type of construction embodying the present invention if fabricated from high strength, low alloy steel would possibly cost more that the cost of the current production steel bumper, but it would not approach the high cost of an equivalent aluminum bumper.

## Claims

1. A bumper assembly comprising an elongated lower cross-member (15) the length of which extends the full width of the bumper assembly, the lower cross-member having two step portions (16, 17) separated by a central portion (18), the lower cross-member having at one longitudinal edge an integral upstanding kick plate flange (23) extending substantially the full length of the cross-member and having at its other longitudinal edge a down-turned flange (25), the two flanges coacting to provide longitudinal rigidity to the lower cross-member, an upper cross-member (28) having step portions (29, 31) extending parallel to and overlying in spaced vertical relationship the step portions (16, 17) of the lower cross-member (15), the upper cross-member step portions (29, 31) having a longitudinal space therebetween overlying the central portion (18) of the lower cross-member (15) to provide a visibility opening for a vehicle license plate (37) mounted on the kick plate flange (23), the upper cross-member (28) at one longitudinal edge being supported on the upper edge of the lower cross-member kick plate flange (23), and a plurality of vertical bulkheads (43) between the upper and lower cross-members for maintaining the two in spaced relationship under vertical load.

2. A dual-step rear bumper assembly according to Claim 1, in which the kick plate flange (23) terminates at its upper edge in a lip flange (27) turned away from and lying substantially parallel to the lower cross-member (15), the upper cross-member step portions (29, 31) being fastened to the lip flange (27) and being cantilevered over the lower cross-member step portions (16, 17).

3. A dual-step rear bumper assembly according to Claims 1 or 2, in which the vertical bulkheads (43) cap the ends of the bumper assembly and box in the ends of the license plate visibility opening, the vertical bulkheads (43) providing vertical load resistance to loads imposed by weight being applied to the steps.

4. A dual-step rear bumper assembly according to Claim 3, in which the central portion (18) of the lower cross-member (15) between the two step portions (16, 17) is depressed and is apertured to receive a trailer ball hitch (21).

## Revendications

1. Pare-chocs comprenant une longue traverse inférieure (15) dont la longueur s'étend sur toute la largeur du pare-chocs, la traverse inférieure comportant deux parties de marche (16, 17) séparées par une partie médiane (18) et présentant, à un bord longitudinal, une aile formant plaque de garde verticale (23) qui en fait partie intégrante et qui s'étend en substance sur toute la longueur de la traverse et, à son autre bord longitudinal, une aile rabattue vers le bas (25), les deux ailes coopérant pour conférer de la rigidité longitudinale à la traverse inférieure, une traverse supérieure (28) comportant des parties de marche (29, 31) qui s'étendent parallèlement aux parties de marche (16, 17) de la traverse inférieure (15) et qui les surplombent à une certaine distance dans le sens vertical, les parties de marche (29, 31) de la traverse supérieure étant séparées par un espace longitudinal surplombant la partie médiane (18) de la traverse inférieure (15) pour ménager une ouverture de visibilité pour une plaque minéralogique (37) du véhicule montée sur l'aile (23) formant plaque de garde, la traverse supérieure (28) étant supportée, à un bord longitudinal, sur le bord supérieur de l'aile (23) formant plaque de garde de la traverse inférieure, et plusieurs cloisons verticales (43) entre les traverses supérieure et inférieure pour les maintenir espacées l'une de l'autre lorsqu'elles sont soumises à une charge verticale.

2. Pare-chocs arrière à deux marches suivant la revendication 1, caractérisé en ce que l'aile (23) formant plaque de garde se termine à son bord supérieur dans une lèvre (27) dirigée dans un sens opposé à la traverse inférieure (15) et en substance parallèle à celle-ci, les parties de marche (29, 31) de la traverse supérieure étant fixées à la lèvre (27) et étant disposées en porte à faux au-dessus des parties de marche (16, 18) de la traverse inférieure.

3. Pare-chocs arrière à deux marches suivant la revendication 1 ou 2, caractérisé en ce que les cloisons verticales (43) coiffent les extrémités du pare-chocs et encadrent les extrémités de l'ouverture de visibilité de la plaque minéralogique, ces cloisons verticales (43) offrant de la résistance dans le sens vertical aux charges exercées par le poids appliqué sur les parties de marche.

4. Pare-chocs arrière à deux marches suivant la revendication 3, caractérisé en ce que la partie médiane (18) de la traverse inférieure (15) entre les deux parties de marche (16, 17) est surbaissée et est percée d'un trou destiné à recevoir une boule d'attelage de remorque (21).

**Patentansprüche**

1. Stoßstangenanordnung, bestehend aus einem länglichen unteren Querträger (15), dessen Länge sich über die volle Breite der Stoßstangenanordnung erstreckt und der zwei durch einen Mittelabschnitt (18) getrennte Stufenteile (16, 17) sowie an einer Längskante einen einstückigen aufrechten, sich im wesentlichen über die volle Länge des Querträgers erstreckenden Trittleistenflansch (23) und an der anderen Linkskante einen nach unten abgebogenen Flansch (25) aufweist, wobei die beiden Flansche so zusammenwirken, dass sie dem unteren Querträger Längssteifheit verleihen, und aus einem oberen Querträger (28) mit Stufenteilen (29, 31), die sich parallel zu den Stufenteilen (16, 17) des unteren Querträgers (15) erstrecken und in senkrechtem Abstand darüberliegen, wobei die Stufenteile (29, 31) des oberen Querträgers zwischen sich einen über dem Mittelabschnitt (18) des unteren Querträgers (15) liegenden länglichen Raum als Sichtöffnung für ein auf dem Trittleistenflansch (23) angebrachtes Fahrzeugnummernschild' (37) aufweisen, und wobei der obere Querträger (28) sich mit einer Längskante auf der Oberkante des Trittleistenflansches (23) des unteren Querträgers und auf mehreren senkrechten Schotten (43) zwischen dem oberen und unteren Querträger abstützt, um die Abstandsbeziehung dieser beiden unter senkrechter Belastung aufrechtzuerhalten.

2. Zweistufige hintere Stoßstangenanordnung nach Anspruch 1, worin der Trittleistenflansch (23) an seiner Oberkante in einem Lippenflansch (27) ausläuft, der vom unteren Querträger (15) hinweggebogen ist und diesem im wesentlichen parallel liegt, wobei die Stufenteile (29, 31) des oberen Querträgers am Lippenflansch (27) befestigt sind und über die Stufenteile (16, 17) des unteren Querträgers auskragen.

3. Zweistufige hintere Stoßstangenanordnung nach Anspruch 1 oder 2, worin die senkrechten Schotten (43) die Enden der Stoßstangenanordnung abdecken und die Enden der Nummernschildsichtöffnung einfassen, wobei die senkrechten Schotten (43) senkrechten Lastwiderstand, gegen auf die Stufen aufgebrachte Gewichtslasten bewirken.

4. Zweistufige hintere Stoßstangenanordnung nach Anspruch 3, worin der Mittelabschnitt (18) des unteren Querträgers (15) zwischen den Stufenteilen (16, 17) erniedrigt ist und eine Öffnung für einen Anhängerkugelkopf aufweist.

0 012 600

FIG.1

FIG.2